# FASCICULE DE BREVET EUROPEEN

(11) **EP 3 204 566 B1**
(45) Date de publication et mention de la délivrance du brevet: **04.03.2020**
(21) Numéro de dépôt: 15798489.9
(22) Date de dépôt: 07.10.2015
(51) Int. Cl.: G10K 11/172, G10K 11/04, E04B 1/82, F16F 7/116, E04B 2/74

(54) **ABSORBEUR DYNAMIQUE NON-LINEAIRE ET SON UTILISATION POUR L'ISOLATION ACOUSTIQUE**
NICHTLINEARER DYNAMISCHER ABSORBER UND SEINE VERWENDUNG ZUR AKUSTISCHEN ISOLATION
NON LINEAR DYNAMIC ABSORBER AND ITS ACOUSTIC ISOLATION USAGE

(30) Priorité: 09.10.2014 FR 1459688
(43) Date de publication de la demande: 16.08.2017
(73) Titulaire: Saint-Gobain Placo, 92150 Suresnes (FR); Saint-Gobain Isover, 92400 Courbevoie (FR); Centre National de la Recherche Scientifique, 75016 Paris (FR)
(72) Inventeur: MATTEI, Pierre-Olivier, 13006 Marseille (FR); BELLIZZI, Sergio, 13009 Marseille (FR); PACHEBAT, Marc, 13008 Marseille (FR); PONCOT, Rémi, 75010 Paris (FR); BERGER, Sylvain, 75018 Paris (FR)
(74) Mandataire: Saint-Gobain Recherche
(86) Numéro de dépôt international: PCT/FR2015/052690
(87) Numéro de publication internationale: WO 2016/055733

(56) Documents cités:
- GB-A- 2 265 669
- KR-B1- 101 439 421
- US-A1- 2009 283 359
- US-A1- 2013 047 523

## Description

La présente invention concerne un absorbeur dynamique non-linéaire et son utilisation pour améliorer l'isolation acoustique entre deux espaces séparés par une paroi.

L'isolation acoustique entre deux pièces, séparées par une paroi, est typiquement assurée soit grâce à l'augmentation de la masse surfacique de la paroi, soit grâce au doublage de ladite paroi. Dans le cas des cloisons à double paroi, un matériau isolant acoustique, typiquement un matelas de laine minérale ou une mousse élastique, peut être inséré dans la lame d'air entre les deux plaques.

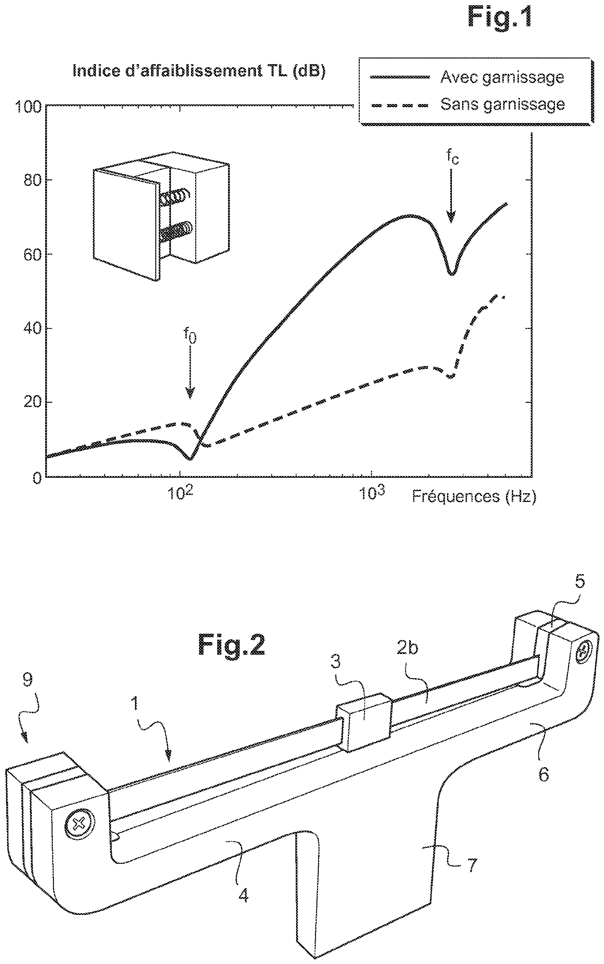

D'un point de vue acoustique, une telle cloison à double paroi, qu'elle soit garnie ou non d'un matériau isolant, se comporte en basse fréquence comme un système masse-ressort-masse où la lame d'air ou le garnissage de matériau isolant joue le rôle du ressort couplant les deux plaques entre elles. La figure 1 montre l'évolution de l'indice d'affaiblissement (NF EN ISO 140-3) d'une telle cloison à double paroi, avec et sans garnissage isolant, en fonction de la fréquence du son.

On constate une première faiblesse caractéristique (f₀) aux basses fréquences (environ 100 - 150 Hz), dite fréquence de « respiration », correspondant à un déplacement en opposition de phase du système, et une deuxième faiblesse caractéristique (f_{c}) aux hautes fréquences (entre 2000 et 3000 Hz), dite fréquence de coïncidence, où la longueur d'onde de l'onde incidente acoustique « coïncide » avec la longueur d'onde des ondes de flexion dans les plaques.

La présente invention a pour but de réduire la transparence acoustique de parois, en particulier de cloisons à double paroi, dans le domaine des basses fréquences, c'est-à-dire à des fréquences comprises entre environ 50 et 150 Hz, sans ajouter une couche d'isolation acoustique supplémentaire ni augmenter l'épaisseur globale de la cloison.

Cet objectif est atteint grâce à un dispositif, d'une taille modeste, fixé sur la paroi en un endroit approprié de celle-ci, et qui est capable d'atténuer, voire de supprimer la résonance de la paroi à sa fréquence de respiration en s'adaptant aux variations intrinsèques de celle-ci. Le phénomène physique à la base de cette atténuation de la résonance de la plaque est connu sous le nom de pompage énergétique (en anglais *energy pumping* ou *non-linear targeted energy transfer)* (Voir par exemple O. Gendelman et al., Energy pumping in non-linear mechanical oscillators, Part I and II, J. Appl. Mech, 68 (2001) 34 - 48).

On appelle pompage énergétique le transfert irréversible de l'énergie vibratoire d'une structure principale, généralement un oscillateur linéaire, vers une structure auxiliaire formée par un oscillateur essentiellement non linéaire. La structure auxiliaire, composée d'une masse couplée à la structure principale via un ressort non linéaire et, éventuellement, un amortisseur, n'a pas de fréquence de résonance propre et peut osciller à n'importe quelle fréquence. A partir d'un seuil d'énergie vibratoire de la structure principale, l'énergie vibratoire de celle-ci est transférée vers la structure auxiliaire, atténuant ainsi l'amplitude des vibrations de la structure principale.

La structure auxiliaire, appelée absorbeur dynamique non-linéaire (en anglais *non-linear energy sink,* abrégé NES), a de préférence une taille significativement plus faible que la structure principale.

Le pompage énergétique est déjà largement utilisé dans des applications variées telles que la protection sismique de bâtiments et d'ouvrages d'art, l'amélioration des performances dynamiques de véhicules ou la stabilisation de navires.

A la connaissance de la Demanderesse, il n'a jusqu'ici pas été envisagé d'utiliser le pompage énergétique pour réduire la transparence acoustique de parois séparant deux espaces d'un bâtiment ou bien l'intérieur d'un bâtiment de l'extérieur.

Il est du mérite de la Demanderesse d'avoir mis au point un tel absorbeur dynamique non-linéaire à la fois simple, robuste et léger qui peut être fixé facilement sur une plaque destinée à jouer un rôle de paroi ou de cloison, telles qu'un élément d'un plafond suspendu, une dalle de plancher, une paroi d'une cloison simple ou double, un élément de doublage etc.

La demande KR10-1439421B divulgue une structure de plancher avec une dalle de plancher, une couche d'absorption acoustique disposée sur la dalle, une plaque de recouvrement disposée sur la couche d'absorption acoustique et ayant une forme telle que des creux sont créés entre la couche d'absorption acoustique et la plaque de recouvrement. Le tout est recouvert d'une couche de mortier. Dans chaque creux créé par la plaque de recouvrement une masse est fixée via une plaque élastique à la plaque de recouvrement afin de réduire la transmission de bruit d'impact de l'étage supérieur à l'étage inférieur. Le document D1 montre toutes les caractéristiques du préambule de la revendication 1.

L'absorbeur dynamique non-linéaire de la présente invention comporte, comme élément essentiel, une lame dont les deux extrémités sont encastrées dans un support (extrémités non libres) et sur laquelle est fixée une petite masse. En cas de sollicitation dynamique, cette lame se comporte comme un ressort non-linéaire oscillant autour de sa position d'équilibre - ou de ses positions d'équilibre - dans une gamme de fréquences englobant la fréquence de sollicitation, permettant ainsi le transfert irréversible de l'énergie vibratoire du résonateur principal, à savoir la plaque sur laquelle est fixé l'absorbeur non-linéaire, vers l'absorbeur dynamique non linéaire. La présente invention est définie dans les revendications annexées.

La présente invention a donc pour objet un absorbeur dynamique non-linéaire comprenant
- une lame avec deux parties d'extrémité et une partie intermédiaire à fonction de ressort non-linéaire,
- une masse fixée à la partie intermédiaire à fonction de ressort non-linéaire de la lame,
- un moyen de fixation permettant de fixer les deux parties d'extrémité de la lame sur un support solide de manière à ce que la partie intermédiaire à fonction de ressort non-linéaire puisse osciller autour de sa position d'équilibre ou de ses positions d'équilibre.

L'absorbeur dynamique non linéaire de la présente invention comporte donc trois moyens essentiels :
- un moyen de fixation de la lame à la structure principale dont il s'agit d'atténuer les vibrations,
- une lame avec deux extrémités non-libres, encastrées dans le moyen de fixation et
- une petite masse fixée sur la partie intermédiaire « libre » de la lame située entre les deux parties d'extrémités encastrées.

Lorsque cet absorbeur est soumis à une sollicitation vibratoire d'une énergie suffisante et d'une fréquence appropriée, la petite masse oscillera dans un plan perpendiculaire au plan principal de la lame, à une fréquence différente de la fréquence d'excitation, la partie intermédiaire de la lame se comportant alors comme un ressort non-linéaire couplant la masse au moyen de fixation et à la structure principale sur laquelle l'absorbeur est fixé.

La lame peut être en n'importe quel matériau élastique rigide, à module d'Young élevé, typiquement supérieur à 50 GPa, de préférence supérieur à 60 et en particulier supérieur à 70 GPa.

Il s'agit de préférence d'une lame métallique.

La masse est de préférence fixée dans la partie centrale - plus précisément le tiers au centre - de la partie intermédiaire à fonction de ressort non-linéaire de la lame, mais cette position n'est pas la seule envisageable et la masse pourrait tout à fait avoir une position excentrée.

La masse peut être en un matériau identique à ou différent de celui de la lame. Comme pour la lame, il s'agit de préférence d'un matériau métallique. On pourrait par exemple envisager que la masse et la lame soient formées d'une seule pièce, la masse correspondant alors à un renflement de la partie intermédiaire de la lame.

La lame est de préférence soumise à une contrainte, en particulier une contrainte de compression ou de torsion. Cette contrainte se traduit par une diminution de la raideur du ressort que forme la lame mince. Les essais réalisés par la Demanderesse ont montré que cette contrainte a également pour conséquence avantageuse un abaissement du seuil de déclenchement du phénomène de pompage énergétique et une augmentation de l'efficacité de l'absorbeur dynamique.

La lame n'est de préférence pas soumise à une contrainte de traction susceptible de diminuer, voire de supprimer, l'efficacité de l'absorbeur dynamique non linéaire (probablement via augmentation de la raideur du ressort et du seuil de déclenchement).

La contrainte de compression ou de torsion est de préférence suffisamment importante pour imposer à la lame un flambement élastique, c'est-à-dire un flambement réversible qui disparaît avec le relâchement de la contrainte. Dans un mode de réalisation préféré de l'absorbeur dynamique non linéaire de la présente invention, la lame est soumise à une contrainte de compression lui imposant un flambement élastique.

Une lame flambée, c'est-à-dire soumise à une contrainte de compression dans le plan de la lame, présente deux points d'équilibre stable, par opposition à une lame non soumise à une contrainte de compression qui présente un seul point d'équilibre stable.

Le flambement élastique de la lame ne doit pas être trop important. En effet lorsque la valeur du flambement dépasse une certaine valeur, la transition entre les deux positions d'équilibre stable devient trop difficile et le ressort non-linéaire n'oscillera alors qu'autour d'une seule position d'équilibre stable.

Le flambement élastique est avantageusement inférieur à 10 %, de préférence inférieur à 6 %, en particulier inférieur à 4 %, ce pourcentage étant exprimé par rapport à la longueur de la partie intermédiaire à fonction de ressort non-linéaire.

On peut également exprimer le flambement de la lame en indiquant le rapport de la déformation à l'épaisseur de la lame. Dans l'absorbeur dynamique non-linéaire de la présente invention ce rapport est de préférence inférieur à 100, en particulier inférieur à 50 et idéalement inférieur à 30.

Dans un mode de réalisation préféré de l'absorbeur dynamique non-linéaire de la présente invention, le moyen de fixation est constitué d'une seule pièce comportant deux moyens d'encastrement des parties d'extrémité de la lame. Ce mode de réalisation est particulièrement avantageux lorsqu'on utilise une lame flambée, car il permet de régler la contrainte en compression de la lame sans que le moyen de fixation soit attaché à la structure principale.

En principe, le moyen de fixation pourrait toutefois être constitué de deux pièces distinctes, chacune de ces pièces comportant un moyen d'encastrement d'une extrémité de la lame. Ce mode de réalisation nécessiterait le réglage de la contrainte de la lame après la fixation de l'absorbeur dynamique non-linéaire sur la structure principale dont il doit atténuer les vibrations.

Le moyen de fixation doit être en un matériau suffisamment rigide pour transmettre les vibrations de la structure principale au ressort non linéaire que forme la lame. Il s'agit de préférence d'un matériau polymère à module d'élasticité assez élevé, typiquement supérieur à 1,5 GPa.

Le moyen de fixation de l'absorbeur non-linéaire ayant servi aux essais réalisés par la Demanderesse était constitué d'ABS (acrylonitrile-butadiène-styrène). L'ABS est un matériau complexe biphasé avec une matrice thermoplastique (acrylonitrile-styrène) dans laquelle sont dispersés des nodules d'élastomère (butadiène). Ces nodules pourraient jouer un rôle important dans la dissipation de l'énergie vibratoire de l'absorbeur dynamique non-linéaire. Un autre matériau biphasé de ce type qui pourrait convenir particulièrement bien pour former le moyen de fixation est le polystyrène choc, un copolymère séquencé poly(styrène-b-butadiène) avec des nodules élastomères de polybutadiène dispersés dans une matrice de polystyrène.

Dans un mode de réalisation intéressant de l'invention, le moyen de fixation est donc formé d'un matériau polymère biphasé comportant une matrice thermoplastique rigide (à module d'Young élevée) et une phase élastomère (à faible module d'Young) dispersée dans la matrice thermoplastique.

L'absorbeur dynamique de la présente invention présente de préférence un plan de symétrie perpendiculaire à l'axe longitudinal de la lame.

Dans un mode de réalisation particulièrement préféré de l'absorbeur dynamique, le moyen de fixation comporte deux branches s'étendant symétriquement à partir d'une base commune. Les deux moyens d'encastrement des parties d'extrémité de la lame sont alors situés respectivement sur les deux branches, de préférence à l'extrémité ou proche de l'extrémité de chacune des branches, en deux positions symétriques l'une par rapport à l'autre.

L'absorbeur dynamique non linéaire peut avoir par exemple une forme globale en U, en Y, ou en V, permettant la fixation sur le support au niveau de la base du U, du Y ou du V.

Dans un mode de réalisation avantageux, les deux moyens d'encastrement sont deux mors.

La masse fixée sur la partie intermédiaire a avantageusement un poids compris entre 1 et 200 g, de préférence entre 2 et 100 g, en particulier entre 3 et 50 g et idéalement entre 5 et 30 g.

La longueur de la partie intermédiaire de la lame est avantageusement comprise entre 1 et 50 cm, de préférence entre 3 et 30 cm et en particulier entre 5 et 20 cm.

L'épaisseur de la partie intermédiaire de la lame est avantageusement comprise entre 0,05 mm et 5 mm, de préférence entre 0,1 et 3 mm, en particulier entre 0,5 et 2 mm.

Enfin, la largeur de la partie intermédiaire de la lame est avantageusement comprise entre 1 mm et 50 mm, de préférence entre 2 mm et 30 mm, en particulier entre 5 et 20 mm.

L'absorbeur dynamique non-linéaire construit et testé par la Demanderesse et décrit plus en détail ci-après, comprend une lame dont la partie intermédiaire est longue de 12 cm, épaisse de 0,1 mm et large de 0,5 cm, au centre de laquelle est fixée une masse de 3 g.

Comme expliqué en introduction, l'absorbeur dynamique non-linéaire de la présente invention est utilisé pour améliorer l'isolation acoustique entre deux espaces séparés par une paroi comprenant au moins une plaque. Cette paroi peut séparer l'intérieur d'un bâtiment de l'extérieur, ou bien elle peut séparer deux pièces d'un bâtiment, ou d'un moyen de transport ferroviaire, naval, automobile ou aéronautique.

Cette paroi peut être un élément de construction en forme de plaque, ou bien elle peut comprendre plusieurs éléments de construction comprenant chacun au moins une plaque. L'absorbeur dynamique non-linéaire est dans tous les cas fixé, via le moyen de fixation, directement sur la ou les plaques de l'élément de construction.

La présente demande a donc en outre pour objet un élément de construction comprenant
- au moins une plaque en un matériau rigide, et
- au moins un absorbeur dynamique non-linéaire tel que décrit ci-avant, fixé de manière rigide sur la plaque par l'intermédiaire du moyen de fixation de l'absorbeur dynamique.

Elle a en outre pour objet une cloison ou paroi, en particulier une cloison ou paroi d'un bâtiment ou d'un moyen de transport ferroviaire, naval, automobile ou aéronautique, comportant un tel élément de construction avec un absorbeur dynamique non-linéaire tel que décrit ci-avant. Cette cloison ou paroi est de préférence une double cloison ou double paroi.

Le module d'Young du matériau rigide formant la plaque est typiquement supérieur à 0,1 GPa, de préférence supérieur à 1 GPa, en particulier supérieur ou égal à 3 GPa.

La plaque peut être en un matériau choisi par exemple parmi le verre, le béton, les métaux, le plâtre, les matières plastiques, le bois ou les matériaux composites.

Dans un mode de réalisation préféré, l'élément de construction comprendra au moins une plaque de plâtre.

Dans un autre mode de réalisation préféré, l'élément de construction fait partie d'une cloison à double paroi, c'est-à-dire il comprend deux plaques parallèles l'une à l'autre et séparées par un espace intermédiaire, également appelé lame d'air. Ce sont en effet ces doubles cloisons comportant deux plaques couplées par une lame d'air, qui posent des problèmes d'une assez grande transparence acoustique dans le domaine des basses fréquences correspondant à la fréquence de « respiration » du système. Ce problème de transparence acoustique est particulièrement prononcé lorsque les deux plaques sont des plaques de plâtre, généralement fixées sur une ossature de rails et/ou de montants, de préférence métalliques.

L'espace intermédiaire, défini entre les deux plaques, est de préférence au moins partiellement rempli par un matériau d'isolation acoustique.

De manière générale, l'absorbeur dynamique non-linéaire est de préférence fixé sur la plaque de manière à ce que le plan de la lame de l'absorbeur soit sensiblement parallèle au plan de la plaque.

L'élément de construction peut comprendre un ou plusieurs absorbeurs dynamiques non-linéaires. Pour des raisons esthétiques évidentes, lorsque l'élément de construction fait partie d'une cloison à double paroi, l'absorbeur dynamique non linéaire est de préférence fixé sur au moins une des faces tournées vers l'intérieur de la double cloison.

Dans le cadre d'un projet d'isolation acoustique d'une paroi existante, l'absorbeur acoustique peut toutefois être fixé sur une face visible, facilement accessible de la paroi.

Pour optimiser l'efficacité de l'absorbeur dynamique non-linéaire, celui-ci doit être installé en un endroit de la plaque où l'amplitude des vibrations de la plaque est maximale. En effet, le pompage énergétique n'est amorcé qu'à partir d'un certain niveau d'énergie vibratoire et la principale difficulté de l'utilisation d'un absorbeur dynamique non-linéaire pour l'isolation acoustique consiste à abaisser le plus possible ce seuil de déclenchement. Il convient donc d'installer l'absorbeur dynamique non-linéaire à l'endroit de la plaque où elle vibre le plus fortement. Cet endroit sera le plus souvent dans la moitié de la surface de la plaque la plus éloignée des bords fixes.

Lorsque l'espace intermédiaire de la double cloison est rempli d'un matériau isolant, l'absorbeur dynamique non linéaire peut être logé dans un renfoncement creusé sur la face interne de la plaque ou dans un renfoncement creusé dans le matériau isolant de manière à ce qu'il ne vienne pas en contact avec celui-ci. Dans une autre variante le remplissage de l'espace intermédiaire par le matériau isolant pourrait n'être que partiel et l'absorbeur dynamique non linéaire pourrait être installé dans la partie non remplie.

Enfin, la présente invention a pour objet l'utilisation d'un absorbeur dynamique non-linéaire tel que décrit ci-dessous ou d'un élément de construction contenant d'un tel absorbeur dynamique non-linéaire pour réduire la transparence acoustique d'une paroi.

Cette utilisation comprend par exemple un procédé de réduction de la transparence acoustique d'une paroi séparant deux pièces d'un bâtiment ou l'intérieur d'un bâtiment de l'extérieur, qui comprend la fixation sur ladite paroi, de préférence sur une plaque de ladite paroi, d'un absorbeur dynamique non-linéaire selon la présente invention.

Bien entendu tous les modes de réalisation mentionnés ci-dessus à propos de l'absorbeur dynamique non-linéaire ou de l'élément de construction le comprenant s'appliquent également à l'utilisation de ces objets pour la réduction de la transparence acoustique d'une paroi.

La présente invention est à présent décrite plus en détail en référence aux figures annexées dans lesquelles
la figure 1 est un graphique montrant l'évolution de l'indice d'affaiblissement d'une double cloison en fonction de la fréquence du son qu'il s'agit d'empêcher de passer à travers la paroi ;
la figure 2 est une vue en perspective d'un absorbeur dynamique non linéaire selon l'invention,
la figure 3 est une vue par le dessus de l'absorbeur dynamique selon l'invention de la figure 2 faisant apparaître les deux positions d'équilibre stable de la lame à fonction de ressort non linéaire ;
la figure 4 montre une coupe transversale d'une double cloison comprenant un absorbeur dynamique non-linéaire selon l'invention.

La figure 1 a été déjà été discutée en introduction. Elle montre le problème technique que la présente invention se propose de résoudre, à savoir la transparence acoustique accrue (f₀) d'une double paroi aux basses fréquences (environ 100 - 150 Hz), dite fréquence de « respiration », correspondant à une résonance en opposition de phase des deux plaques d'une paroi double.

L'absorbeur dynamique non-linéaire 9 de la présente invention, représenté sur la figure 2, comprend un moyen de fixation 4 en forme de Y aplati. Ce moyen de fixation est composé d'une base 7 à partir de laquelle s'étendent symétriquement deux branches 6. A l'extrémité de chaque branche 6 se trouve un moyen d'encastrement 5 dont le serrage est réglable au moyen d'une vis. Les deux moyens d'encastrement 5 tiennent les deux parties d'extrémités (non visibles) d'une lame métallique 1. La partie intermédiaire 2b de la lame peut vibrer librement lorsqu'elle est activée par la vibration du résonateur principal (non représenté) sur lequel l'absorbeur dynamique non linéaire 9 sera fixé. Au centre de la lame 1 est fixée une petite masse 3.

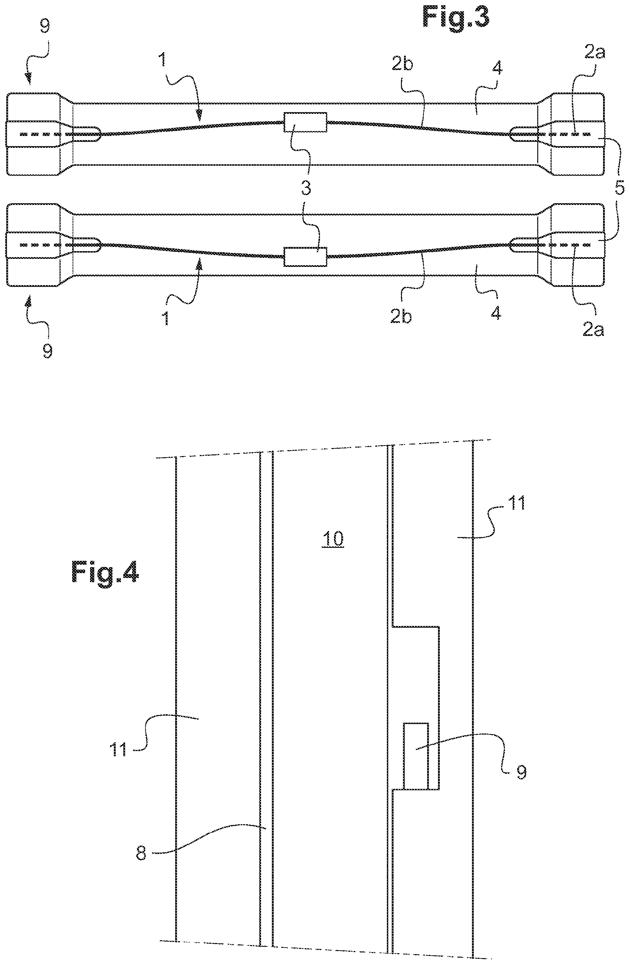

La figure 3 montre le même absorbeur dynamique non-linéaire dont la lame 1 est soumise à une contrainte de compression qui s'exerce selon l'axe de symétrie longitudinal de la lame. Cette contrainte de compression est générée grâce au fait que la partie intermédiaire 2b de la lame comprise entre les deux parties d'extrémités 2a, encastrées dans les moyens d'encastrement 5 est plus longue que la distance séparant les deux moyens d'encastrement. Cette contrainte de compression impose un flambement à la lame 1. Chacune des deux représentations montre une position d'équilibre stable de la lame 1 flambée. En cours de fonctionnement, c'est-à-dire lorsque l'absorbeur dynamique non-linéaire selon l'invention est fixé rigidement sur une plaque soumise à une vibration suffisante, la lame peut passer d'une position d'équilibre stable à l'autre.

Enfin, la figure 4 représente de façon très schématique l'absorbeur dynamique non-linéaire 9 selon l'invention, fixé dans un renfoncement d'une plaque 11 qui fait partie d'un élément de constructions selon l'invention. Cet élément de construction est ici une cloison à double paroi formée de deux plaques 11 entre lesquelles est défini un espace intermédiaire 8 rempli par un matériau isolant 10. L'absorbeur dynamique non-linéaire est fixé sur la plaque de manière à ce que le plan de la lame (non visible) soit sensiblement parallèle au plan général de la plaque 11.

## Revendications

1. Elément de construction comprenant au moins une plaque (11) en un matériau rigide et au moins un absorbeur dynamique non-linéaire (9) comprenant
- une lame (1) avec deux parties d'extrémité (2a) et une partie intermédiaire (2b) à fonction de ressort non-linéaire,
- une masse (3) fixée à la partie intermédiaire (2b) à fonction de ressort non-linéaire de la lame,
- un moyen de fixation (4) permettant de fixer les deux parties d'extrémité (2a) de la lame (1) sur un support solide de manière à ce que la partie intermédiaire (2b) à fonction de ressort non-linéaire puisse osciller autour de sa position d'équilibre ou de ses positions d'équilibre,
le moyen de fixation (4) étant constitué d'une seule pièce comportant deux moyens d'encastrement (5) des parties d'extrémité (2a) de la lame et comportant deux branches (6) s'étendant symétriquement à partir d'une base commune (7), les deux moyens d'encastrement (5) étant situés respectivement sur les deux branches (6), l'absorbeur dynamique non-linéaire (9) étant fixé de manière rigide sur la plaque (11) par l'intermédiaire du moyen de fixation (4), l'élément de construction étant **caractérisé en ce que** la lame est soumise à une contrainte lui imposant un flambement élastique.

2. Elément de construction selon la revendication 1, **caractérisé par le fait que** la lame est soumise à une contrainte de compression ou de torsion.

3. Elément de construction selon la revendication 1, **caractérisé par le fait que** la lame est soumise à une contrainte de compression lui imposant un flambement élastique.

4. Elément de construction selon la revendication 3, **caractérisé par le fait que** le flambement élastique est inférieur à 10 %, de préférence inférieur à 6 %, en particulier inférieur à 4 %, ce pourcentage étant exprimé par rapport à la longueur de la partie intermédiaire à fonction de ressort non-linéaire.

5. Elément de construction selon l'une des revendications précédentes, **caractérisé par le fait que** la masse (3) est fixée dans la partie centrale de la partie intermédiaire (2b) à fonction de ressort non-linéaire de la lame.

6. Elément de construction selon l'une quelconque des revendications précédentes, **caractérisé par le fait que** la lame est une lame métallique.

7. Elément de construction selon la revendication 1, **caractérisé par le fait que** les deux moyens d'encastrement (5) sont situés à l'extrémité ou proche de l'extrémité de chacune des branches.

8. Elément de construction selon l'une quelconque des revendications précédentes, **caractérisé par le fait que** l'absorbeur dynamique non-linéaire est fixé sur la plaque de manière à ce que le plan de la lame (1) de l'absorbeur soit sensiblement parallèle au plan de la plaque.

9. Elément de construction selon l'une des revendications précédentes, **caractérisé par le fait que** la plaque (11), ou au moins une des plaques, est une plaque de plâtre.

10. Elément de construction selon l'une des revendications précédentes, **caractérisé par le fait qu'**il comprend deux plaques (11) parallèles l'une à l'autre et séparées par un espace intermédiaire (8).

11. Elément de construction selon la revendication 10, **caractérisé par le fait que** les deux plaques (11) sont des plaques de plâtre, de préférence fixées sur une ossature de rails et/ou de montants.

12. Elément de construction selon la revendication 10 ou 11, **caractérisé par le fait que** l'espace intermédiaire (8), entre les deux plaques (11), est rempli avec un matériau d'isolation acoustique (10).

13. Paroi d'un bâtiment comprenant un élément de construction selon l'une quelconque des revendications précédentes.

14. Utilisation d'un élément de construction selon l'une des revendications 1 à 12 pour réduire la transparence acoustique d'une paroi.

## Patentansprüche

1. Konstruktionselement, umfassend mindestens eine Platte (11) aus einem starren Material und mindestens einen nichtlinearen dynamischen Absorber (9), umfassend
- eine Klinge (1) mit zwei Endabschnitten (2a) und einem Zwischenabschnitt (2b) mit nichtlinearer Federfunktion,
- eine Masse (3), die an dem Zwischenabschnitt (2b) mit nichtlinearer Federfunktion der Klinge befestigt ist,
- ein Befestigungsmittel (4) zum Befestigen der zwei Endabschnitte (2a) der Klinge (1) auf einem festen Träger, sodass der Zwischenabschnitt (2b) mit nichtlinearer Federfunktion um seine Gleichgewichtsposition oder seine Gleichgewichtspositionen schwingen kann,
wobei das Befestigungsmittel (4) aus einem einzigen Stück besteht, das zwei Einbettungsmittel (5) der Endabschnitte (2a) der Klinge aufweist und zwei Schenkel (6) aufweist, die sich symmetrisch ab einer gemeinsamen Basis (7) erstrecken, wobei die zwei Einbettungsmittel (5) jeweils auf den zwei Schenkeln (6) angeordnet sind, wobei der dynamische nichtlineare Absorber (9) über das Befestigungsmittel (4) starr an der Platte (11) befestigt ist, wobei das Konstruktionselement **dadurch gekennzeichnet ist, dass** die Klinge einer Belastung ausgesetzt ist, die ihr eine elastische Knickung auferlegt.

2. Konstruktionselement nach Anspruch 1, **dadurch gekennzeichnet, dass** die Klinge einer Kompressions- oder Torsionsbelastung ausgesetzt ist.

3. Konstruktionselement nach Anspruch 1, **dadurch gekennzeichnet, dass** die Klinge einer Kompressionsbelastung ausgesetzt ist, die ihr eine elastische Knickung auferlegt.

4. Konstruktionselement nach Anspruch 3, **dadurch gekennzeichnet, dass** die elastische Knickung weniger als 10 %, vorzugsweise weniger als 6 %, insbesondere weniger als 4 % beträgt, wobei dieser Prozentsatz bezogen auf die Länge des Zwischenabschnitts mit nichtlinearer Federfunktion ausgedrückt ist.

5. Konstruktionselement nach einem der vorhergehenden Ansprüche, **dadurch gekennzeichnet, dass** die Masse (3) im Mittelabschnitt des Zwischenabschnitts (2b) mit nichtlinearer Federfunktion der Klinge befestigt ist.

6. Konstruktionselement nach einem der vorhergehenden Ansprüche, **dadurch gekennzeichnet, dass** die Klinge eine Metallklinge ist.

7. Konstruktionselement nach Anspruch 1, **dadurch gekennzeichnet, dass** sich die zwei Einbettungsmittel (5) am Ende oder nahe dem Ende jedes der Schenkel befinden.

8. Konstruktionselement nach einem der vorhergehenden Ansprüche, **dadurch gekennzeichnet, dass** der nichtlineare dynamische Absorber so auf der Platte befestigt ist, dass die Ebene der Klinge (1) des Absorbers etwa parallel zur Ebene der Platte ist.

9. Konstruktionselement nach einem der vorhergehenden Ansprüche, **dadurch gekennzeichnet, dass** die Platte (11) oder zumindest eine der Platten eine Gipsplatte ist.

10. Konstruktionselement nach einem der vorhergehenden Ansprüche, **dadurch gekennzeichnet, dass** es zwei zueinander parallele und durch einen Zwischenraum (8) voneinander getrennte Platten (11) umfasst.

11. Konstruktionselement nach Anspruch 10, **dadurch gekennzeichnet, dass** die zwei Platten (11) Gipsplatten sind, die vorzugsweise an einem Rahmen aus Schienen und/oder Pfosten befestigt sind.

12. Konstruktionselement nach Anspruch 10 oder 11, **dadurch gekennzeichnet, dass** der Zwischenraum (8) zwischen den zwei Platten (11) mit einem Schallschutzmaterial (10) gefüllt ist.

13. Gebäudewand, umfassend ein Konstruktionselement nach einem der vorhergehenden Ansprüche.

14. Verwendung eines Konstruktionselements nach einem der Ansprüche 1 bis 12 zur Reduzierung der akustischen Durchlässigkeit einer Wand.

## Claims

1. A building element comprising at least one sheet (11) of a rigid material and at least one nonlinear energy sink (9) comprising
- a blade (1) with two end parts (2a) and a nonlinear spring function intermediate part (2b),
- a mass (3) fixed to the nonlinear spring function intermediate part (2b) of the blade,
- a fixing means (4) allowing the two end parts (2a) of the blade (1) to be fixed to a solid support in such a way that the nonlinear spring function intermediate part (2b) can oscillate about its position of equilibrium or its positions of equilibrium,
the fixing means (4) consisting of a single piece comprising two built-in means (5) for clamping the end parts (2a) of the blade, with two branches (6) extending symmetrically from a common base (7), the two built-in means (5) being situated respectively on the two branches (6),
the nonlinear energy sink (9) being fixed rigidly to the sheet (11) by the fixing means (4),
the construction element being **characterized in that** the blade is subjected to stress that causes it elastic buckling.

2. The building element as claimed in claim 1, **characterized in that** the blade is subjected to a compressive or torsional stress.

3. The building element as claimed in claim 1, **characterized in that** the blade is subjected to a compressive stress causing it elastic buckling.

4. The building element as claimed in claim 3, **characterized in that** the elastic buckling is less than 10%, preferably less than 6%, particularly less than 4%, this percentage being expressed with respect to the length of the nonlinear spring function intermediate part.

5. The building element as claimed in one of the preceding claims, **characterized in that** the mass (3) is fixed in the central part of the nonlinear spring function intermediate part (2b) of the blade.

6. The building element as claimed in any of the preceding claims, **characterized in that** the blade is a metal blade.

7. The building element as claimed in claim 1, **characterized in that** the two built-in means (5) are situated at or near the end of each of the branches.

8. The building element as claimed in any of the preceding claims, **characterized in that** the nonlinear energy sink is fixed to the sheet in such a way that the plane of the blade (1) of the sink is substantially parallel to the plane of the sheet.

9. The building element as claimed in one of the preceding claims, **characterized in that** the sheet (11) or at least one of the sheets, is a sheet of plasterboard.

10. The building element as claimed in one of the preceding claims, **characterized in that** it comprises two sheets (11) that are parallel to one another and separated by an intermediate space (8).

11. The building element as claimed in claim 10, **characterized in that** the two sheets (11) are sheets of plasterboard, preferably fixed to a framework of rails and/or uprights.

12. The building element as claimed in claim 10 or 11, **characterized in that** the intermediate space (8) between the two sheets (11) is filled with an acoustic insulation material (10).

13. A wall of a building comprising a building element as claimed in any of the preceding claims.

14. The use of a building element as claimed in one of claims 1 to 13 for reducing the acoustic transparency of a wall.
